# EUROPEAN PATENT APPLICATION

(11) **EP 4 783 081 A1**
(43) Date of publication of application: **29.07.2026**
(21) Application number: 26153820.1
(22) Date of filing: 23.01.2026
(51) Int. Cl.: G06Q 10/063

(54) **AUTOMATION OF PRODUCT CARBON FOOTPRINT COMPUTATIONS**

(30) Priority: 24.01.2025 US 202563749075 P
(71) Applicant: Services Pétroliers Schlumberger, 75007 Paris (FR); GeoQuest Systems B.V., 2514 JG The Hague (NL)
(72) Inventor: GEORGES-NACHEF, Kinda, Houston, 77042 (US); BODEWAR, Dinesh, Houston, 77042 (US); RODRIGUEZ DE VECCHIS, Victor Manuel, Houston, 77042 (US); COTA ELIZONDO, Raul Carlos, Houston, 77042 (US)
(74) Representative: Schlumberger Intellectual Property Department

(57) **Abstract**

A method implements automation of product carbon footprint computations. A process map view is displayed, including multiple process nodes and product nodes. A process view is displayed for a process model associated with one of the process nodes. The process map view is updated with a footprint node that is connected to one or more process nodes. A set of process models, including the selected process model, is processed using footprint data from the footprint node to calculate process emissions. The process map view is updated to display the calculated emissions for the connected process nodes. The process emissions are further processed to determine an overall emission value. A dashboard view is displayed showing the emission value for a product represented by a product node.

## Description

### CROSS REFERENCE TO RELATED APPLICATIONS

This application claims the benefit of U.S. Provisional Application 63/749,075, filed January 24, 2025, which is incorporated by reference herein.

### BACKGROUND

Product carbon footprint (PCF) analysis provides a detailed understanding of the emissions generated throughout the entire lifecycle of a product, including raw material extraction, processing, transportation, use, and disposal. Product carbon footprint analysis is used by companies aiming to assess the environmental impact of products and identify opportunities for emission reductions at the product level. Traditionally, product carbon footprint studies are conducted by highly skilled lifecycle assessment (LCA) engineers who manually build models, collect data, allocate emissions, and generate the final product carbon footprint. The process is labor-intensive, time-consuming, and prone to human error.

Existing technologies and methods for product carbon footprint analysis have several limitations. Manual model-building and data collection are inefficient and rely on expertise, making the analysis difficult to perform regularly or at scale. Additionally, the manual allocation of emission data to specific processes and products may lead to inaccuracies and inconsistencies, especially when dealing with complex production systems. Current methods also lack the ability to dynamically adapt to different standards, guidelines, or regulations, which may negatively affect compliance and accurate reporting.

For example, conventional approaches may involve static models that do not account for real-time changes in production processes or environmental conditions. Using static models without real-time changes may result in suboptimal resource utilization and inaccurate carbon footprint calculations. Furthermore, the reliance on manual adjustments and calibrations limits the scalability and repeatability of product carbon footprint analyses, hindering widespread adoption and implementation. A challenge is to develop and display product carbon footprints in a way that automates the model-building, data collection, and emission allocation processes.

### SUMMARY

In general, in one or more aspects, the disclosure relates to a method for automating product carbon footprint computations. The method involves displaying a process map view including a process map with multiple process nodes and multiple product nodes. The method further involves displaying a process view for a process model of a process node from the process map. The method further involves updating the process map view with a footprint node connected to one or more process nodes from the process map. The method further involves processing multiple process models, including the process model, with footprint data corresponding to the footprint node to calculate multiple process emissions. The method further involves updating the process map view to display the multiple process emissions for the one or more process nodes. The method further involves processing the multiple process emissions to calculate an emission value. The method further involves displaying a dashboard view with the emission value for a product represented by a product node from the process map.

In general, in one or more aspects, the disclosure relates to a system that includes at least one processor and an application that executes on the at least one processor. Executing the application performs displaying a process map view including a process map with multiple process nodes and multiple product nodes. Executing the application further performs displaying a process view for a process model of a process node from the process map. Executing the application further performs updating the process map view with a footprint node connected to one or more process nodes from the process map. Executing the application further performs processing multiple process models, including the process model, with footprint data corresponding to the footprint node to calculate multiple process emissions. Executing the application further performs updating the process map view to display the multiple process emissions for the one or more process nodes. Executing the application further performs processing the multiple process emissions to calculate an emission value. Executing the application further performs displaying a dashboard view with the emission value for a product represented by a product node from the process map.

In general, in one or more aspects, the disclosure relates to a non-transitory computer readable medium including instructions executable by at least one processor. Executing the instructions performs displaying a process map view including a process map with multiple process nodes and multiple product nodes. Executing the instructions further performs displaying a process view for a process model of a process node from the process map. Executing the instructions further performs updating the process map view with a footprint node connected to one or more process nodes from the process map. Executing the instructions further performs processing multiple process models, including the process model, with footprint data corresponding to the footprint node to calculate multiple process emissions. Executing the instructions further performs updating the process map view to display the multiple process emissions for the one or more process nodes. Executing the instructions further performs processing the multiple process emissions to calculate an emission value. Executing the instructions further performs displaying a dashboard view with the emission value for a product represented by a product node from the process map.

Other aspects of one or more embodiments may be apparent from the following description and the appended claims.

### BRIEF DESCRIPTION OF DRAWINGS

FIG. 1 shows a diagram in accordance with the disclosure.
FIG. 2 shows a method in accordance with the disclosure.
FIG. 3, FIG. 4.1, FIG. 4.2, FIG. 5.1, FIG. 5.2, FIG. 6.1, FIG. 6.2, FIG. 7.1, FIG. 7.2, and FIG. 8 show examples in accordance with the disclosure.
FIG. 9.1 and FIG. 9.2 show computing systems in accordance with the disclosure.

Similar elements in the various figures may be denoted by similar names and reference numerals. The details of features and elements described in one figure may extend to similarly named features and elements in different figures.

### DETAILED DESCRIPTION

The disclosure addresses the limitations of existing methods for calculating and displaying product carbon footprints in an interactive graphical user interface using a system that automates and streamlines the model-building, data collection, and emission allocation processes. Implementations of the disclosure assess the environmental impact of products throughout a lifecycle, from raw material extraction to disposal.

Implementations of the disclosure generate and display process maps and process models in an interactive graphical user interface based on initial product selections or facility type selections so users may customize parameters and automatically allocate emission data using physics-based simulation models. Implementations of the disclosure make the product carbon footprint generation process more efficient and accurate.

Implementations of the disclosure may include automated process mapping, automated allocation of emission data, and flexible product carbon footprint computation. For automated process mapping, the system may generate a list of processes and pre-built process models based on the initial product selection, which may be adjusted and customized by the user. For automated allocation of emission data, the system automatically allocates emission data using physics-based simulation models to specific processes and products, supported by measurements for enhanced accuracy. For flexible product carbon footprint computation, the system may compute different product carbon footprints according to various rules, standards, guidelines, or regulations selected by the user.

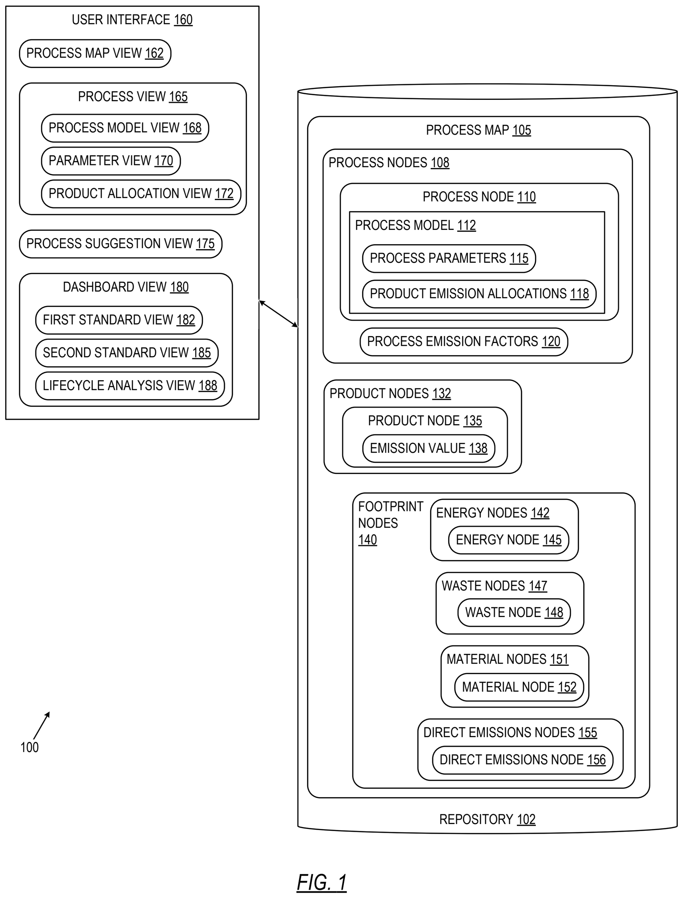

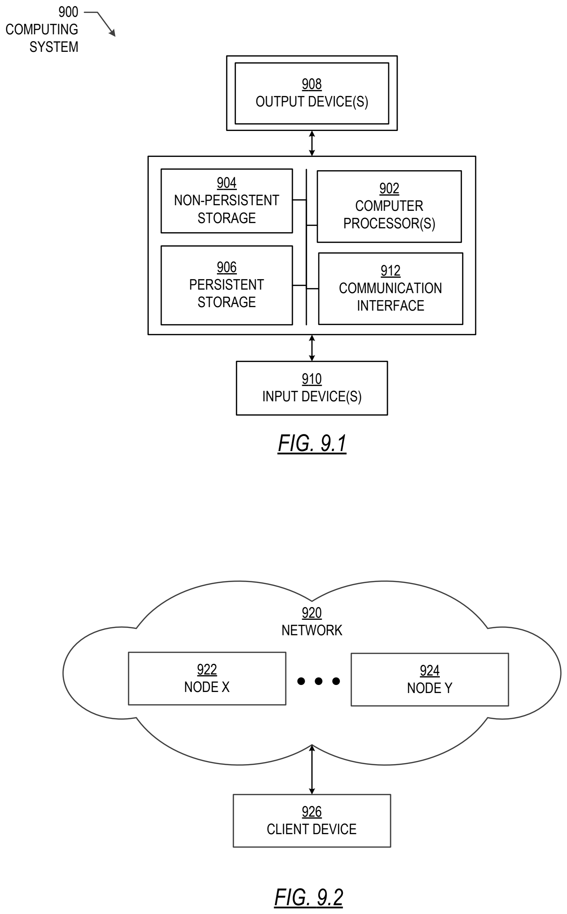

Turning to FIG. 1, the components (100) operate as part of a computing system to implement the automation of product carbon footprint computations. The components (100) may be part of and execute within a computing system as described in FIG. 9.1 and FIG. 9.2. The components (100) include the repository (102) and the user interface (160).

The repository (102) is a type of storage unit and/or device *(e.g.,* a file system, database, data structure, or any other storage mechanism) for storing the data used by the system (100). The repository (102) may include multiple different, potentially heterogenous, storage units and/or devices. The repository (102) stores data utilized by other components of the system (100) and may form part of a cloud data platform. The data stored by the repository (102) may include the process map (105).

The process map (105) is a data structure that enumerates the processes involved in the production cycle of a product. The process map (105) may be a graph with nodes and edges between the nodes. The process map (105) may include the process nodes (108), the product nodes (132), and the footprint nodes (140). The edges between the nodes of the process map representing the flow of materials and energy through the processes within the process map (105). The different nodes of the process map (105) may correspond to a different step in a production cycle, such as raw material extraction, processing, transportation, use, disposal, *etc.* The process map (105) may be customized to reflect specific parameters and conditions to assess the environmental impact of the processes and products, which identify opportunities for emission reductions.

The process map is stored on a storage device, such as memory. In storage, each node is stored in a corresponding allocated storage location. Each edge is a stored reference. Specifically, a directed edge from a first node to a second node may be stored in a first corresponding allocated memory location of the first node and have a location identifier of a second corresponding allocated memory location of the second node.

The process nodes (108) are a collection of nodes within the process map (105) that represent the processes used to generate the products represented by the product nodes (132). Types of processes that may be represented by the process nodes (108) include steam cracking, distillation, mercaptan oxidation (merox), hydrotreating, naphtha hydrotreating, delayed coking, fluid catalytic cracking (fcc), fractionation, polymerization, *etc.* The process nodes (108) include the process node (110).

The process node (110) is one of the process nodes (108). The process node (110) is a data structure that represents one of the processes in the production cycle of a product. The process node (110) may be connected to multiple ones of the product nodes (132) to represent that the process corresponding to the process node (110) produces multiple types of products. The process node (110) includes the process model (112) and the process emissions (120).

The process model (112) is a program that may simulate or measure a process represented by the process node (110). The process of the process model (112) may include multiple unit operations that operate to produce one or more products as outputs from one or more products as inputs. The process model (112) calculates the product emission allocations (118) using the process parameters (115).

The process parameters (115) are a set of defined variables and conditions that influence the activities and operations within the process model (112). The process parameters (115) are used to create a digital twin of a facility from the stand point of emissions, then based on the digital twin, compute the environmental impact of production processes. The process parameters (115) may include parameters for energy consumption, material inputs, operational efficiency, emissions, environmental conditions, process variables, *etc.* Energy consumption parameters relate to the amount of energy used for the process and corresponding unit operations and may include types of energy sources (e.g., electricity, natural gas, renewable energy) and respective consumption rates. Material input parameters define raw materials and intermediate products used within the process and may include quantities, types, and properties of materials, such as density, chemical composition, purity, *etc.* Operational efficiency parameters measure the efficiency of the process operations and may include metrics, such as production yield, cycle time, resource utilization rates, *etc.* Emission parameters quantify the emissions generated during the process and may include specific emission rates for pollutants, such as carbon dioxide (CO₂), methane (CH₄), nitrous oxide (N₂O), sulfur hexafluoride (SF₆), perfluorocarbons (PFCs), and hydrofluorocarbons (HFCs), particulate matter, *etc.* Environmental condition parameters quantify external environmental factors, which may be external and passive, that influence the process describing the environment in which the process operates, and may include ambient temperature, humidity, atmospheric pressure, *etc.* Process variable parameters define the operational settings and control variables that are internal and active to the process and may include temperature, pressure, flow rates, reaction times, *etc.*

The product emission allocations (118) are values generated by the process model (112) using the process parameters (115). The values of the product emission allocations (118) represent the proportion of emissions assigned to a specific product output by the process represented by the process node (110). The product emission allocations (118) may quantify the environmental impact of each output product of the process and be used to identify opportunities for emission reductions. The product emission allocations (118) may be percentage-based values allocated to products as percentages of the total emissions generated by the process so that each output product receives a proportional share of the emissions based on contribution to the process. The product emission allocations (118) may be specific to multiple types of emissions with individual metrics for pollutants, such as carbon dioxide (CO₂), methane (CH₄), nitrous oxide (N₂O), sulfur hexafluoride (SF₆), perfluorocarbons (PFCs), and hydrofluorocarbons (HFCs), particulate matter, *etc.* The product emission allocations (118) may be calculated using the process model (112) based on various parameters, including energy consumption, material inputs, operational efficiency, *etc.*

The process emissions (120) are values that quantify carbon equivalent generated in the process through the consumed energy, the consumed material, *etc.,* (that can be expressed per unit of time, such as kgCO₂e / hour). One of the process emissions (120) may correspond to one of the process nodes (108). The process emissions (120) may be percentage based relative to the total footprint quantity (*e.g.,* energy, waste, material, direct emissions, *etc*.) from one of the footprint nodes (140) (*e.g.,* one of the energy nodes (142), the waste nodes (147), the material nodes (151), the direct emission nodes (155), *etc*.) connected to the set process nodes. The process emissions (120) are used to assessing the the environmental impact of processes within a production cycle defined by the process map (105). The calculation of the process emissions (120) may be performed using each of the process models (including the process model (112)) for each one of the process nodes (108) that are connected to one of the footprint nodes (140). The process emissions (120), may be computed based on process models, and according to product carbon footprint standards, and methodology selections.

The product nodes (132) are a collection of nodes within the process map (105) that represent the products used and generated by the processes represented by the process nodes (108). Types of products that may be represented by the process nodes (108) include petrochemical products, hydrocarbons, *etc.,* such as methane (CH₄), ethane (C₂H₆), propane (C₃H₈), butanes (C₄H₁₀), light naphtha, heavy naphtha, kerosene, diesel, gasoline, light vacuum gas oil (LVGO), heavy vacuum gas oil (HVGO), vacuum residue, butadiene, raffinate, isobutene, polybutene, polyisobutene, *etc.* The product nodes (132) include the product node (135).

The product node (135) is one of the product nodes (132). The product node (135) is a data structure that represents one of the products generated by the processes of the process map (105). The product node (135) may be connected to multiple ones of the process nodes (108). The product node (135) may be an input to one or more of the process nodes (108) and be an output from one or more of the process nodes (108). The product node (135) includes the emission value (138).

The emission value (138) is a quantitative measure of the emissions associated with the production of the product represented by the product node (135) created using the process in the process map (105). The emission value (138) may be expressed in grams of CO₂ equivalent per megajoule (gCO₂e/MJ).

The footprint nodes (140) are nodes that define footprint quantities (e.g., energy, waste, material, direct emissions, *etc.)* related to the carbon footprint of the processes of the process map (105). A footprint node may be an energy node, a waste node, a material node, a direct emissions node, *etc.* The footprint nodes (140) include the energy nodes (142), the waste nodes (147), the material nodes (151), and the direct emissions nodes (155).

The energy nodes (142) are a collection of the footprint nodes (140) within the process map (105) that quantify the amount of energy (or equivalent emissions) used by the processes represented by a collection of one or more of the process nodes (108). The energy nodes (142) may quantify the energy used by one facility. The energy nodes (142) include the energy node (145).

The energy node (145) is one of the energy nodes (142). The energy node (145) may quantify an amount of energy used at a facility during operation of the processes represented by the process nodes (108) and performed at the facility.

The waste nodes (147) are a collection of the footprint nodes (140) within the process map (105) that represent waste outputs generated by the processes represented by the process nodes (108). The waste nodes (147) quantify the types and amounts of waste materials or byproducts that are not intended for further use and are to be treated, stored, or disposed of. Waste nodes (147) may include solid waste, liquid effluents, gaseous emissions not captured by direct emissions nodes, or hazardous byproducts requiring special handling. Each waste node (147) may be connected to one or more of the process nodes (108) to indicate the origin of the waste within the production cycle. The waste nodes (147) may also be connected to treatment or disposal processes, if modeled, or may serve as terminal nodes in the process map (105) to indicate the end of the material flow for waste streams.

The waste node (148) is one of the waste nodes (147). The waste node (148) is a data structure that represents a specific waste stream generated by a process in the production cycle. The waste node (148) may include metadata describing the waste type (e.g., chemical composition, physical state), quantity, associated emissions, and regulatory classification (e.g., hazardous, non-hazardous, recyclable). The waste node (148) may also include a waste emission value, which quantifies the environmental impact of the waste stream, such as greenhouse gas emissions from decomposition or incineration, expressed in grams of CO₂ equivalent per unit of waste (*e.g.,* gCO₂e/kg). The value may be calculated using process models (*e.g.,* the process model (112)) and may be influenced by process parameters (115), such as waste treatment efficiency, temperature, and containment measures. The waste node (148) may be visualized in the process map view (162) and may be interactively selected to display additional views, such as a waste treatment view or a waste impact view, which allow users to simulate alternative waste management strategies and assess their effect on the overall product carbon footprint.

The material nodes (151) are a collection of the footprint nodes (140) within the process map (105) that represent the raw materials, intermediate materials, and auxiliary substances used as inputs in the production processes represented by the process nodes (108). The material nodes (151) are inputs to the lifecycle analysis that quantify the material flows and associated environmental impacts, including upstream emissions from extraction, processing, and transportation. Each material node in the material nodes (151) may be connected to one or more process nodes (108) to indicate the consumption of the material by the corresponding process. The material nodes (151) may also be connected to product nodes (132) or waste nodes (147) to represent transformation, loss, or disposal of materials during the production cycle.

The material node (152) is one of the material nodes (151). The material node (152) is a data structure that represents a specific material input used in one or more processes of the process map (105). The material node (152) may include metadata such as material type (e.g., crude oil, natural gas, catalyst, solvent), chemical composition, physical properties (e.g., density, viscosity, phase), and source origin (e.g., geographic location, supplier, extraction method). The material node (152) may also include a material emissions, which quantifies the upstream emissions associated with the production and delivery of the material, expressed in grams of CO₂ equivalent per kilogram (gCO₂e/kg) or per megajoule (gCO₂e/MJ). The emissions may be derived from lifecycle inventory databases, supplier-specific data, or simulation models and may vary based on region, extraction method, and transportation mode. The material node (152) may be visualized in the process map view (162) and may be interactively selected to display additional views, such as a material detail view or a supply chain impact view. The views may be used to analyze the environmental burden of material inputs, simulate alternative sourcing strategies, and assess the impact of material substitutions on the overall product carbon footprint.

The direct emissions nodes (155) are a collection of the footprint nodes (140) within the process map (105) that represent emissions released into the environment from specific processes represented by the process nodes (108). The emissions may not be embedded in products or waste streams but are instead emitted as a result of combustion, chemical reactions, venting, flaring, or fugitive leaks during production. The direct emissions nodes (155) provide a mechanism for explicitly modeling and quantifying these emissions to improve the accuracy of product carbon footprint assessments. Each direct emissions node in the direct emissions nodes (155) may be connected to one or more process nodes (108) to indicate the source of the emissions. The direct emissions nodes (155) may also be linked to energy nodes (142) or material nodes (151) to reflect dependencies between fuel combustion, material degradation, or catalyst use and the resulting emissions. The direct emissions nodes (155) include the direct emissions node (156).

The direct emissions node (156) is one of the direct emissions nodes (155). The direct emissions node (156) is a data structure that represents a specific emission stream released directly from a process. The direct emissions node (156) may include metadata such as emission type (e.g., CO₂, CH₄, N₂O, NOₓ, SOₓ), emission source (*e.g.,* combustion, venting, flaring, leakage), and emission pathway (*e.g.,* stack, ground-level release, fugitive). The direct emissions node (156) may also include a direct emission value, which quantifies the mass or rate of emissions released, typically expressed in kilograms or grams of CO₂ equivalent per hour (kgCO₂e/h or gCO₂e/h), or per unit of product or energy. The values may be calculated using emissions, process models (*e.g.,* the process model (112)), or direct measurements from sensors or monitoring systems. The direct emissions node (156) may be visualized in the process map view (162) and may be interactively selected to display additional views, such as an emissions breakdown view or a regulatory compliance view. The views may be used to analyze the contribution of direct emissions to the overall carbon footprint, simulate mitigation strategies (*e.g.,* carbon capture, process optimization), and assess compliance with environmental regulations.

The user interface (160) is an aggregate of visual and interactive elements (user interface elements) through which the functionality of a program may operate. The user interface elements of the user interface (160) include graphical components, such as buttons, menus, display panels, *etc.,* as well as the input elements, such as text fields, drop down boxes, selection lists, interactive controls, *etc.,* that enable, receive, and display information in the user interface (160). The user interface (160) includes multiple user interface elements that may be displayed and interacted with to send and receive data. One user interface element (such as a view) may include a collection of multiple user interface elements. The user interface (160) includes the process map view (162), the process view (165), the process suggestion view (175), the dashboard view (180), *etc.*

The process map view (162) is an interface element that displays the process map (105). The process map view (162) may display the process map (105) with interface elements representing the process nodes (108), the product nodes (132), and the footprint nodes (140). The process map view (162) may display lines between the process nodes (108) and the product nodes (132) that identify which processes (represented by the process nodes (108)) produce which products (represented by the product nodes (132)). The process map view (162) may display lines between the footprint nodes (140) and the process nodes (108) that identify the sources of footprint quantities (energy, waste, materials, direct emissions, etc.) used by the processes (represented by the process nodes (108)).

The process map view (162) is a component of the user interface (160) that visually represents the process map (105). The process map view (162) interactively displays and manipulates the process nodes (108), the product nodes (132), and the footprint nodes (140) that form the process map (105). Within the process map view (162), the process nodes (108) represent various production processes, such as steam cracking, distillation, and polymerization. The product nodes (132) represent the products generated by the processes, including petrochemical products like methane, ethane, and gasoline.. The footprint notes (140) quantify the consumption and emission of footprint quantities associated with the processes. E.g., the energy nodes (142) quantify the energy consumption associated with the processes. The waste nodes (147) quantify the waste outputs associated with the processes. The material nodes (151) quantify the materials and substances used as inputs to the processes. The direct emissions nodes (155) quantify the emissions released into the environment from the processes.

The process map view (162) may be interacted with by a user to customize and adjust the process map (105) by adding or removing nodes and edges, modifying process parameters, such as energy consumption, material inputs, emissions, and simulating different environmental impacts. The process map view (162) displays edges between the nodes as lines connecting the nodes, illustrating the flow of materials, energy, waste, direct emissions, *etc.,* between processes and products to identify relationships and dependencies within the production cycle.

The process map view (162) integrates data from the repository (102) to display information that is accurate. The information displayed may be generated by the process models (including the process model (112)) that simulate the processes represented by the process nodes (108) to calculate product emission allocations (118), and emission values (138) that quantify emissions associated with the production of products, which may be expressed in grams of CO₂ equivalent per megajoule (gCO₂e/MJ).

The process map view (162) may be customized by a user to match a specific application by adjusting parameters to simulate different production conditions and assess environmental impacts. Product carbon footprints may be computed according to various rules, standards, guidelines, or regulations selected by the user. By automating the display and adjustment of process maps, the process map view (162) enhances accuracy, reduces the likelihood of human error, increases the precision of product carbon footprint analyses, and streamlines the traditionally labor-intensive process of model-building and data collection.

The process view (165) is a component of the user interface (160) that interactively visualizes individual process models (*e.g.,* the process model (112)). Selecting the process node (110) from the process map (105) displayed in the process map view (162) may trigger display of the process view (165) for the process model (112). With the process view (165), users may examine, adjust, and simulate the processes represented by each of the process nodes (108) in the process map (105). The process view (165) may display the process model (112), including visual representations of various unit operations, such as reaction, separation, and purification steps, with the process parameters (115) that influence the process, including energy consumption, material inputs, operational efficiency, and emissions.

Through interaction with the process view (165), simulation and analysis of the environmental impact of different processes by modifying process parameters (115) to simulate different operational conditions and assess the impact on product emission allocations (118). Real-time feedback on the effects of parameter changes may be displayed through the process view (165) to optimize processes for reduced emissions and improved efficiency. The process view (165) integrates data from the repository (102) to display information that is accurate. The information displayed may be generated by simulating the processes to calculate product emission allocations (118) based on the adjusted parameters and providing quantitative measures of emissions associated with the production of products.

The process view (165) may be interactively customized to match a specific application by configuring the process models (*e.g.,* the process model (112)) to reflect specific production scenarios and environmental conditions. The process view (165) includes the process model view (168), the parameter view (178), and the product allocation view (172).

The process model view (168) is a component of the user interface (160) that interactively visualizes a process model (*e.g.,* the process model (112)). The process model view (168) may be displayed within the process view (165) to a side of the parameter view (170) opposite from the product allocation view (172). The process model view (168) is used to simulate, analyze, and optimize the processes represented by the unit operations within a process model. The process model view (168) displays a process model (*e.g.,* the process model (112)), including visual representations of various unit operations, such as reaction, separation, and purification steps. The process model view (168) may be customized to match a specific application. For example, the process models (112) and corresponding unit operations may be configured to reflect specific production scenarios and environmental conditions.

The parameter view (170) is a component of the user interface (160) that interactively manipulates process parameters or a process model, such as the process parameters (115) of the process model (112) for the process node (110). The parameter view (170) may be displayed within the process view (165) between the process model view (168) and the product allocation view (172). Values for the process parameters may be retrieved from the repository (102) and may be adjusted by the user.

The product allocation view (172) is a component of the user interface (160) that interactively displays product emission allocations, such as the product emission allocations (118) of the process model (112) for the process node (110). The product allocation view (172) may be displayed within the process view (165) to a side opposite from the process model view (168). Values for the product emission allocations may be calculated using a process model with process parameters, e.g., using the process model (112) with the process parameters (115).

The process suggestion view (175) is a component of the user interface (160) that generates and displays suggestions for processes to include in the process map (105) based on a product identified by the user. The process suggestion view (175) leverages data analysis and simulation models to recommend processes for the production cycle of the specified product. Using the process suggestion view (175), a product may be identified with various attributes, such as product type, chemical composition, production requirements, and environmental impact considerations. The product identification or the facility type identification serves as the basis for generating process suggestions.

The process suggestion view (175) analyzes the identified product or facility type and recommends suitable processes. For example, the identified product may be matched with pre-built process models or process maps stored in the repository (102) that are associated with the production of the specified product.

The dashboard view (180) is a component of the user interface (160), designed to provide users with an overview of the product carbon footprint analysis and related data. The dashboard view (180) consolidates metrics, visualizations, and controls, to monitor, analyze, and manage the environmental impact of a product. The dashboard view (180) may display metrics, such as total emissions, energy consumption, and material usage, along with graphical representations of data, including charts, graphs, and tables that illustrate trends, comparisons, and distributions.

The dashboard view (180) may be interacted with to explore and analyze data in detail through drill-down capabilities that allow users to click on specific data points or metrics to view more detailed information and underlying data. The dashboard view (180) may include customizable views to adjust the layout and content of the dashboard to focus on specific information. The dashboard view (180) integrates data from the repository (102) to include real-time updates of metrics and visualizations based on the data from ongoing analyses and simulations, as well as automated alerts for changes or anomalies in the data. The dashboard view (180) may include the first standard view (182), the second standard view (185), and the lifecycle analysis view (188).

The first standard view (182) is a component of the user interface (160) that interactively visualizes product carbon footprint calculations based on a specific set of rules, standards, guidelines, or regulations. The first standard view (182) may be displayed adjacent to the second standard view (185) and adjacent to the lifecycle analysis view (188). The first standard view (182) displays compliance and regulatory information in the assessment of environmental impacts according to the selected standard. The specific standard, guideline, or regulation to be applied may be selected in the product carbon footprint analysis along with specifying various attributes, such as regulatory body, geographic region, industry sector, and specific environmental criteria. The selection serves as the basis for the calculations and visualizations displayed in the first standard view (182) and may be cascaded through the process models for each of the process nodes (108) to generate emission values that conform with the selected standard.

The first standard view (182) may display metrics, such as total emissions, energy consumption, and material usage, calculated in accordance with the selected standard. Additionally, the first standard view (182) provides visual representation of compliance with the selected standard, including thresholds, limits, and benchmarks.

The second standard view (185) is a component of the user interface (160) that interactively visualizes product carbon footprint calculations based on another specific set of rules, standards, guidelines, or regulations. The second standard view (185) may be displayed adjacent to the first standard view (182) and adjacent to the lifecycle analysis view (188). The second standard view (185) may include the same or similar elements as the first standard view (182), updated for a different selected standard.

The lifecycle analysis view (188) is a component of the user interface (160) that visualizes the lifecycle analysis of a product to assess the environmental impact of products throughout the lifecycle, from raw material extraction to disposal. The lifecycle analysis view (188) displays the lifecycle stages of a product and the distribution of emissions between the stages from the extraction of raw materials, transporting materials and products, and the processing of materials. Data displayed in the lifecycle analysis view (188) may correspond to the regulation or methodology selected.

Interaction with the lifecycle analysis view (188) may be performed to explore and analyze the data in detail, including stage-specific metrics, such as emissions, energy consumption, and material usage for different lifecycle stages. Parameters may be modified to simulate different operational conditions and assess the impact on the lifecycle analysis. The lifecycle analysis view (188) integrates data from the repository (102) to display information that is accurate and up-to-date. The displayed information includes information generated from simulating the processes at the lifecycle stages to calculate product emission allocations based on the adjusted parameters and providing quantitative measures of emissions associated with each lifecycle stage.

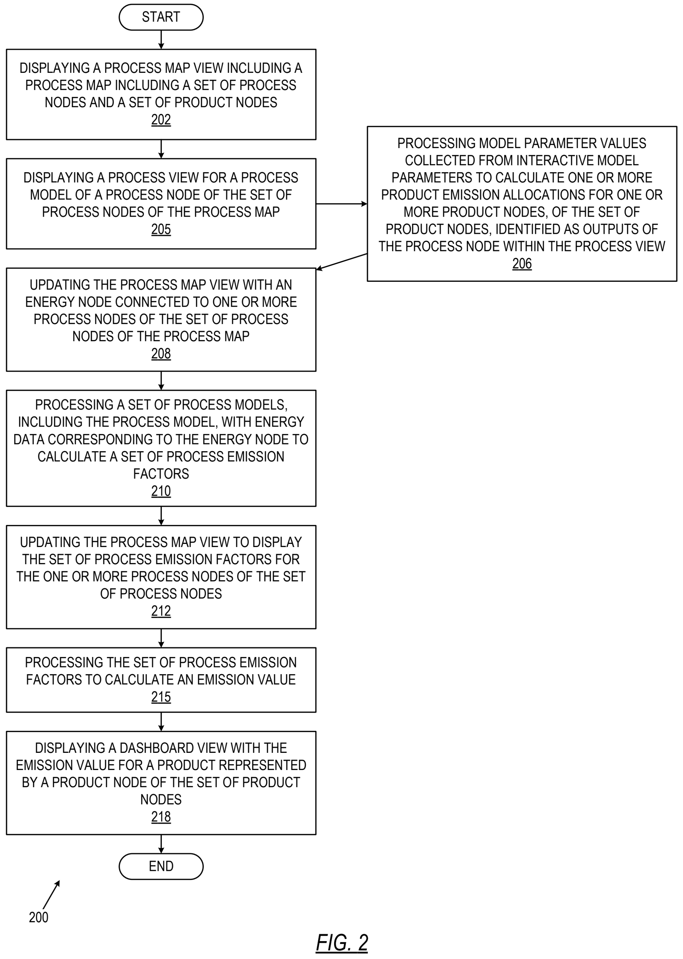

FIG. 2 shows a flowchart of a method implementing automation of product carbon footprint computations. The method of FIG. 2 may be implemented using the systems described in the other figures, and one or more of the steps may be performed on, or received at, one or more computer processors. The system may include at least one processor and an application that, when executing on the at least one processor, performs the method. A non-transitory computer readable medium may include instructions that, when executed by one or more processors, perform the method. The outputs from various components (including models, functions, procedures, programs, processors, *etc.*) for performing the method may be generated by applying a transformation to inputs using the components to create the outputs without using mental processes or human activities.

Turning to FIG. 2, the process (200) may manipulate process maps to automate product carbon footprint calculations. The process (200) may include multiple steps (*e.g.,* Block 202 through Block 212) that may execute on the components described in the other figures, including those of FIG. 1, FIG. 9.1 and FIG. 9.2.

Block 202 involves displaying a process map view including a process map that includes a set of process nodes and a set of product nodes. The process map view may be displayed after generating the process map. The process map may be retrieved from a repository, transmitted to a user device, and rendered by the user device into a user interface. The process map view may be interactively displayed to adjust process nodes, product nodes, energy nodes, waste nodes, material nodes, and direct emissions nodes displayed within the process map view that represent the processes and products in a production cycle and the energy used by the production cycle.

Displaying the process map view may involve displaying the process map view responsive to selection of the product. The process map in the process map view may be predefined and correspond to one of the product and a facility type. The predefined process map may be retrieved from a repository and rendered on the user device.

The process (200) may further involve displaying a process suggestion view with a list of processes responsive to a selection of the product. Displaying a process suggestion view may be performed prior to displaying the process map view and after receiving a selection of a product, or facility type. With the process suggestion view, the user may select additional process nodes to include in the process map.

The process (200) may further involve updating the process map view to include the process node to represent a process from the list of processes after being selected from the process suggestion view. One or more processes may be selected from the process suggestion view that may each be displayed and connected to form a process map.

Block 205 involves displaying a process view for a process model of a process node of the set of process nodes of the process map. The process view may be displayed responsive to a selection of a process node from the process map.

Displaying the process view may involve displaying a process model view including an interactive graphical representation of the process model within the process view. The process model view may be displayed with a parameter view and a product allocation view within the process view. The process model view displays a visualization of a process model that may depict the unit operations and corresponding equipment used to generate output products from input products. The visualization of the process model may be interactive to add, remove, and manipulate the unit operations and equipment of the process model. With the process model view, the process model may be revised by a user within the process model view.

Displaying the process view may involve displaying a parameter view including interactive model parameters within the process view. The parameter view may be displayed with a process model view and a product allocation view within the process view. The parameter view displays a set of parameters that are utilized by the model to generate product emission allocations. The parameters may include flow rates and conditions that may be retrieved from a repository and manipulated with user input. With the parameter view, the interactive model parameters may be revised by a user within the process view.

Displaying the process view may involve adjusting the interactive model parameters to match a physical process. In the process view, a parameter view is presented where a collection of model parameters is retrieved from a repository and made available for modification through interactive graphical user interface elements. The parameters, which may include flow rates, operational conditions, energy consumption, material inputs, and emission rates, are editable so that values may be revised in accordance with data obtained from actual physical operations. The adjustments are performed by the user to align the digital representation of the process with real-world conditions, such as the quantities of materials consumed, the types and rates of energy used, the efficiency of unit operations, and the environmental conditions under which the process is conducted. As the parameters are modified, the underlying process model may be recalculated to reflect the updated values, and the resulting outputs (including product emission allocations and process emissions) may be updated in real time. The adjustment of interactive model parameters may be used to iteratively refine the process model for more accurate simulation of the physical process, with immediate feedback provided through the user interface.

With Block 206, displaying the process view may involve processing model parameter values collected from interactive model parameters to calculate one or more product emission allocations for one or more product nodes, of the set of product nodes, identified as outputs of the process node within the process view. The model parameter values may be processed responsive to changes received by the user for the parameter values and may be responsive to changes in the repository for the values of the underlying data to provide real time product emission allocations.

Displaying the process view may involve displaying a product allocation view including one or more product emission allocations for the one or more product nodes. The product allocation view may be displayed with a process model view and a parameter view within the process view. The product allocation view displays the product emission allocations calculated from the model parameter values displayed in the parameter view. With the product allocation view, the product allocations may be calculated and revised by a user within the product allocation view.

Displaying the process view may involve processing the one or more product emission allocations to generate the set of process emissions. The process map may display a set of process emission. Adaptation of the computations for product emission allocations and process emissions may be executed according to different sets of rules or methodologies. The process emission displayed as part of a process map in the process map view may be updated in real time with the product emission allocations generated by a process model that was displayed in the process view.

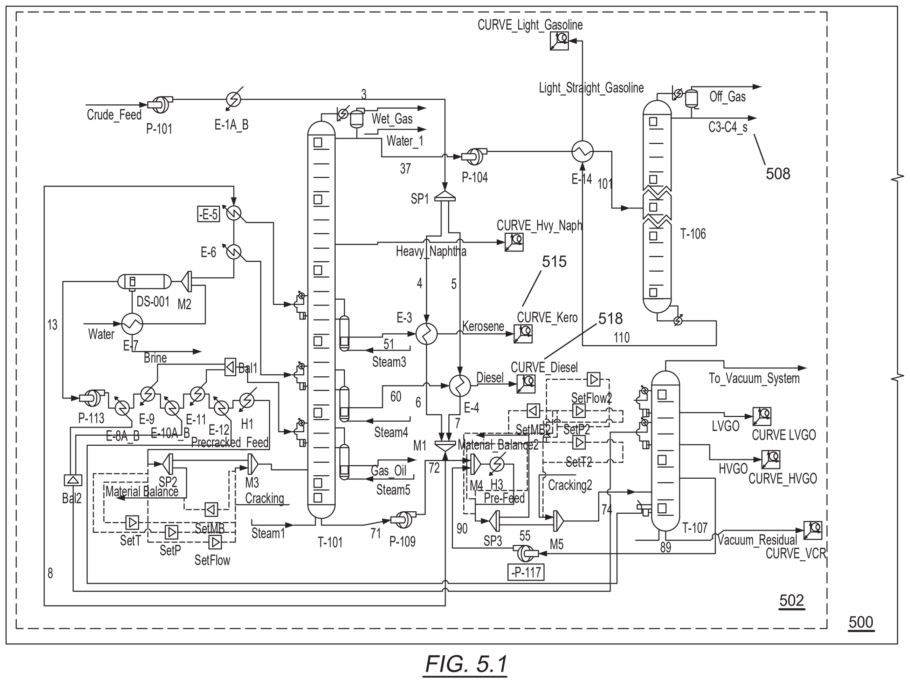

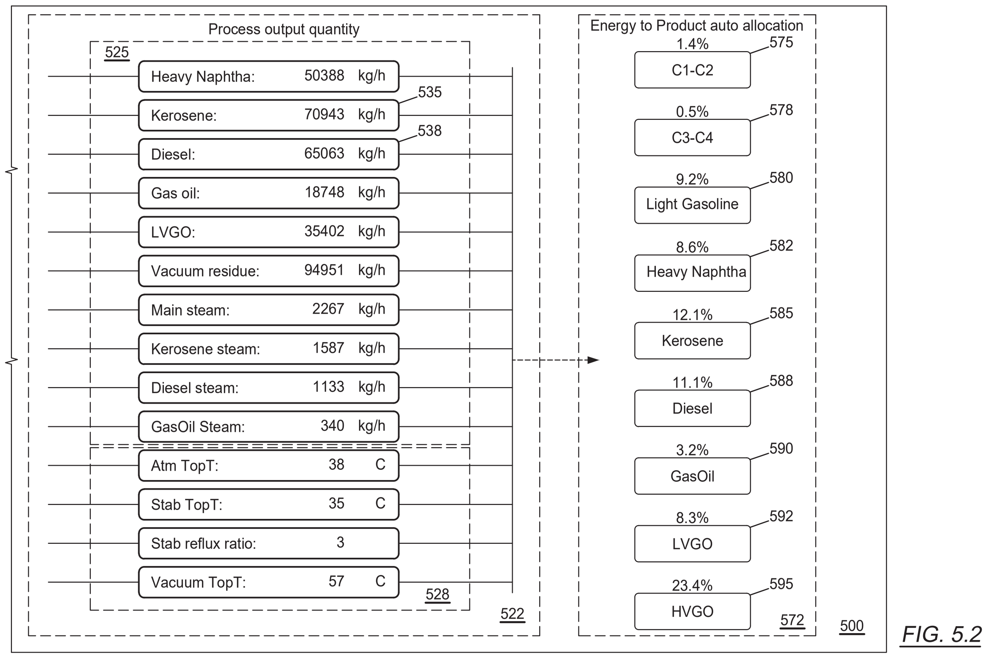

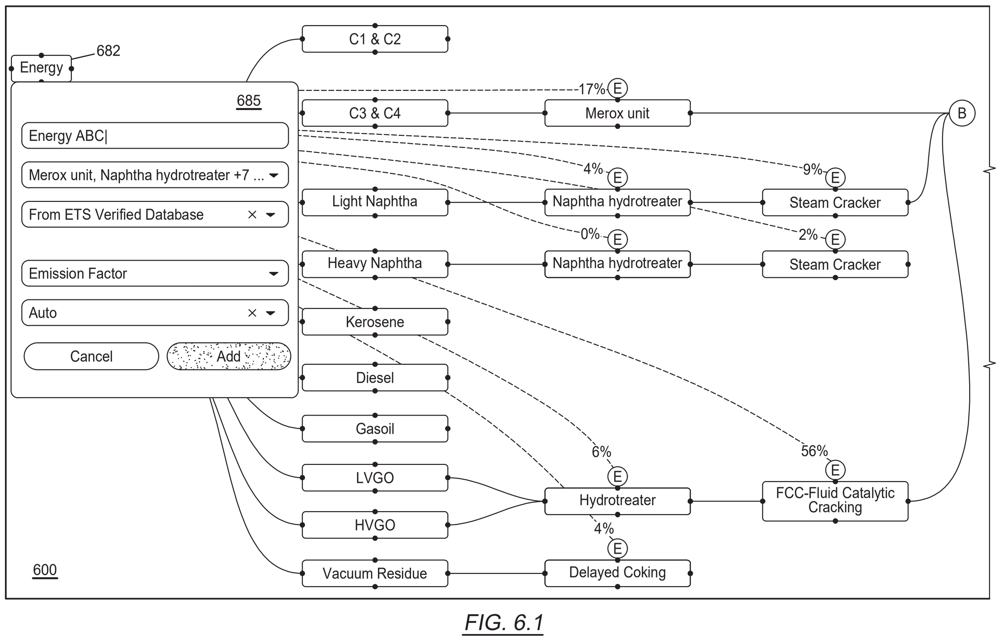

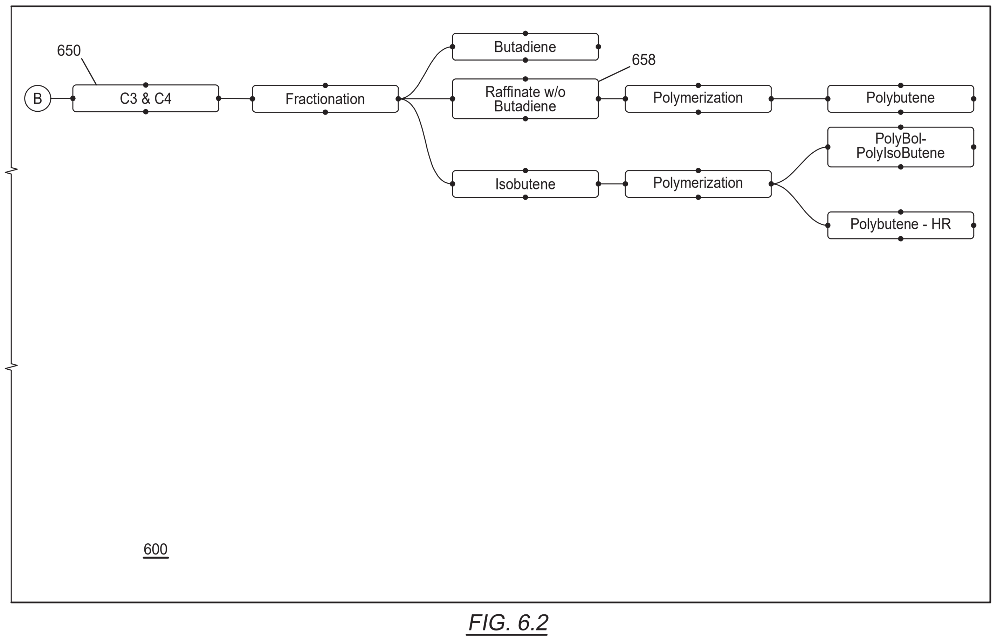

As an example, the process view (600) of FIG. 6.1 and FIG. 6.2 displays a process map that includes the process labeled "Merox Unit" with the process emissions factor of "17%" and the product allocation view (572) of the process model view (500) of FIG. 5.1 and FIG. 5.2 includes the product labeled "C1-C2" with the product emission allocation of "1.4%". The process emissions displayed in the process map in the process view (600) of FIG. 6.1 and FIG. 6.2 may be updated in real time based on changes to the product emission allocations in the product allocation view (572) of the process model view (500) of FIG. 5.1 and FIG. 5.2.

Displaying the process view may involve adapting computation of the product emission allocations according to a different set of rules. A different rule set, standard, or regulatory framework may be selected through the user interface, and the selection is used to configure the computational logic of the process models associated with the process nodes. The selected rules may define specific emission factors, allocation methodologies, boundary conditions, compliance criteria, *etc.,* which are applied to the process models to for alignment with the selected framework. Once the configuration is updated, the process models may be executed using the revised parameters and logic, and the product emission allocations may be recalculated accordingly. The recalculated allocations reflect the methodologies of the newly selected rules and are used to update the values displayed in the product allocation view. The updated allocations may be presented in real time to display the effect of the rule change on the environmental impact assessment of the product. In some implementations, multiple standard views may be displayed concurrently to enable comparison of emission values computed under different regulatory frameworks, thereby supporting multi-standard compliance analysis and decision-making.

Block 208 involves updating the process map view with a footprint node connected to one or more process nodes of the set of process nodes of the process map. The footprint node may be added by interaction with the user interface to locate the position of the footprint node within the process map view. Lines representing edges between the footprint node and one or more process nodes may be added by interaction with the user interface to identify the process nodes, and corresponding processes, that consume or emit the footprint quantity specified the footprint node.

Updating the process map view with the footprint node may involve displaying a footprint popup view to collect footprint parameter data for the footprint data. Different popup views may be displayed for different types of footprint nodes, including energy popup views for energy nodes, waste popup views for waste nodes, material popup views for material nodes, direct emissions popup views for direct emissions nodes, *etc.* After the footprint node is located within the process map view, the footprint popup view may be displayed that may collect additional information. An item within the footprint popup view may indicate that the product emission allocations are to be automatically calculated from the process models of the process nodes of the process map displayed in the process map view.

Updating the process map view with the footprint node may involve updating the process map view with a set of footprint nodes, including the footprint node, for a set of facilities. Each of the footprint nodes may correspond to a facility and be connected to the processes that also correspond to the facility. One facility may be represented by multiple footprint nodes.

processing a set of process models, including the process model, with footprint data corresponding to the footprint node to calculate a set of process emissions. Process emissions may be calculated for each of the different types of footprint quantities represented by the different types of footprint nodes. For a footprint node, the process models for each of the process nodes connected to the footprint node are processed to calculate the process emissions for each of the process nodes and corresponding processes. The calculation of the process emissions using the process models distributes the footprint quantity between the different processes based on the amount of the footprint quantity used by each of the processes, which is based on the process models.

Block 212 involves updating the process map view to display the set of process emissions for the one or more process nodes of the set of process nodes. The display of the values for the process emissions may be continuously updated responsive to changes to the underlying data, parameters, and process models utilized to calculate the process emissions.

Block 215 involves processing the set of process emissions to calculate an emission value. The process emissions may be percentage based and used to process emissions measurements to calculate the emission value for the product.

Block 218 involves displaying a dashboard view with the emission value for a product represented by a product node of the set of product nodes. The dashboard view may be displayed after a process map is created with the process map view. The dashboard view may incorporate multiple views that interpret the calculations generated using the process models of the process map.

Displaying the dashboard view may involve displaying a first standard view with a first adjusted emission value compared to a first standard threshold for the product. The first standard view may be displayed with a chart that identifies the emission value and the acceptable emission value for a particular regulation. The first standard view may be displayed adjacent to a second standard view and a lifecycle analysis view. The first standard view may be displayed to the left of the second standard view and above the lifecycle analysis view.

Displaying the dashboard view may involve displaying a second standard view with a second adjusted emission value compared to a second standard threshold for the product. The second standard view may be displayed with a chart that identifies the emission value and the acceptable emission value for a different regulation. The second standard view may be displayed adjacent to a first standard view and a lifecycle analysis view. The second standard view may be displayed to the right of the first standard view and above the lifecycle analysis view.

Displaying the dashboard view may involve displaying a lifecycle analysis view under a first standard view and under a second standard view with a set of emission distributions for the product. The lifecycle analysis view may display a bar chart with information that is updated when changes are made to the process map and underlying data. The bars in the bar chart may identify different stages of the production cycle of the product and quantify the percentage of emissions attributed to each of the stages.

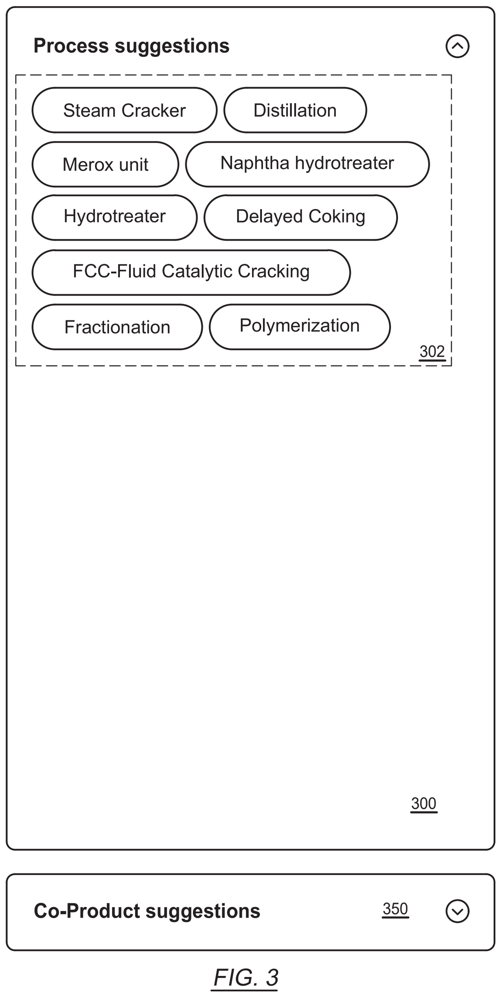

Turning to FIG. 3, the process suggestion view (300) may be displayed on a user interface of a user device. After selecting a product, the process suggestion view (300) is populated with the process suggestions (302). The process suggestions (302) may be identified from a mapping between products (and/or facilities) and processes that identifies sets of processes for each of the products (and/or facilities). Each of the process suggestions (302) may be independently selected. The processed suggestions (302) that are selected may be incorporated into a process map.

The co-product suggestion view (350) may operate similarly to the process suggestion view (300). Instead of providing suggestions for processes that may be related to the selected product (and/or facility), the co-product suggestion view (350) may provide suggestions for co-products that may be related to the product (and/or facility). A co-product is a material (*i.e.,* another product) generated during the manufacturing or production process that has a physical and chemical composition equivalent to an intentionally manufactured product or raw material.

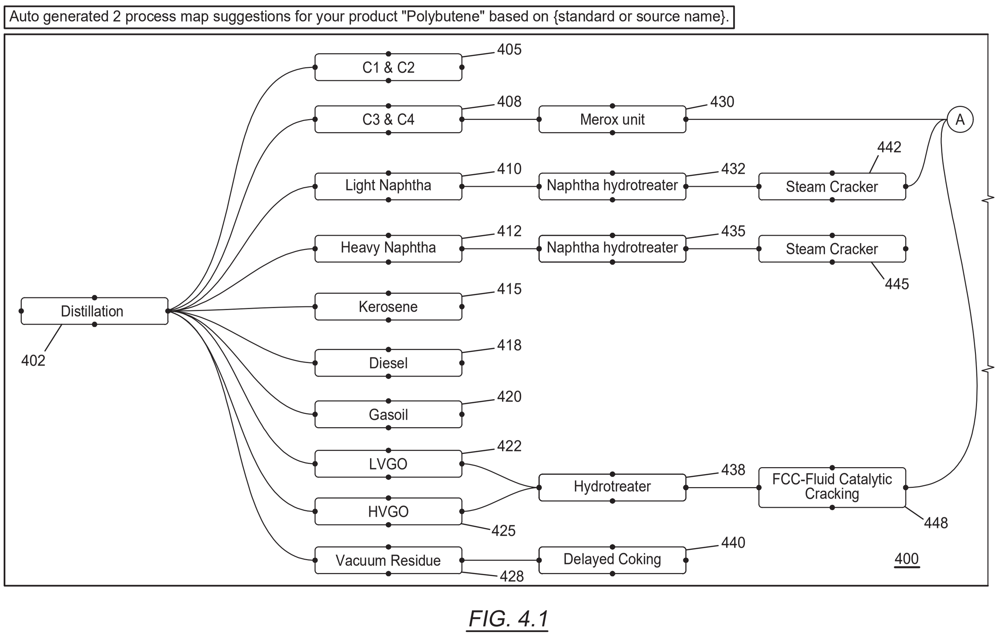

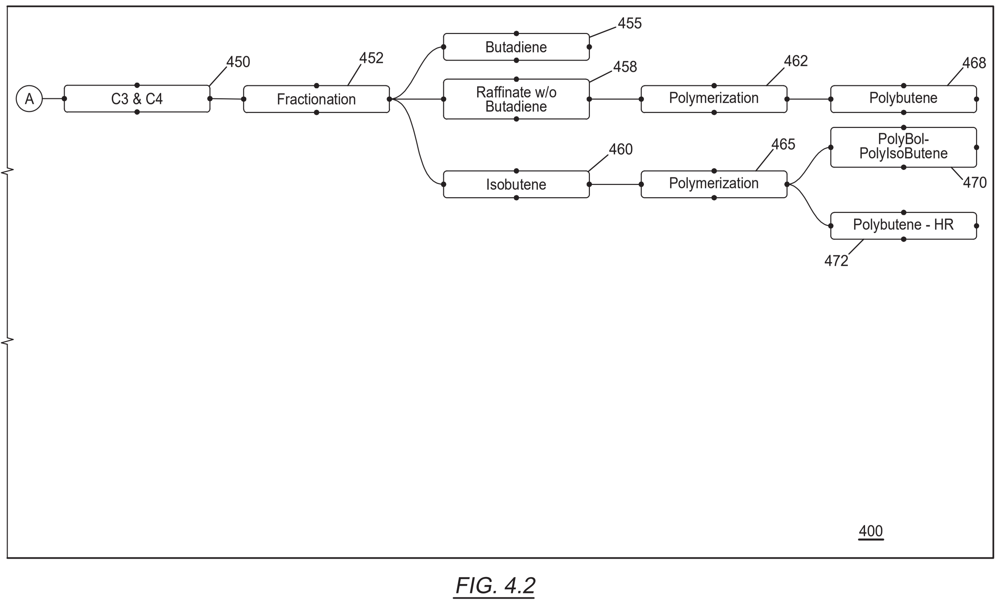

FIG. 4.1 and FIG. 4.2 illustrate the process map view (400). FIG. 4.1 shows a left side of the process map view (400) and FIG. 4.2 shows a right side of the process map view (400).

The process map view (400) displays a visualization of a process map in a user interface. The process map displayed in the process map view (400) may be a prebuilt process map that is customizable and based on a selection of a product (*i.e.,* the product polybutene represented by the node (468)) by the user.

The process map view (400) displays nodes that represent products and processes of a process map. The nodes representing processes include the nodes (402), (430), (432), (435), (438), (440), (442), (445), (448), (452), (462), and (465). The nodes representing products include the nodes (405), (408), (410), (412), (415), (418), (420), (422), (425), (428), (450), (455), (458), (460), (468), (470), and (472). As an example, the node (402) represents a distillation process that produces products represented by the nodes (405), (408), (410), (412), (415), (418), (420), (422), (425), and (428).

Colors may be used to differentiate the types of nodes. The nodes (405), (408), (410), (412), (415), (418), (420), (422), (425), (428), (450), (455), and (458) may be shaded light blue to indicate that the products represented by the nodes are intermediate products formed during the production cycle. The node (468) may be shaded dark blue to indicate that the product represented by the node (468) is the output product of the production cycle. The node (468) may represent the product that was initially selected by the user, which was used to display the process suggestion view (300) of FIG. 3. The nodes (470) and (472) may be shaded dark green to indicate that the products represented by the nodes are co-products generated with the output product represented by the node (468).

Each of the nodes in the process map (400) may be selected by a user to adjust the attributes, properties, values, *etc.,* of the node, which may be done by displaying another view related to the node. For example, selecting the node (402) may bring up the process model view (500) of FIG. 5.1 and FIG. 5.2.

FIG. 5.1 and FIG. 5.2 illustrate the process model view (500). FIG. 5.1 shows a left side of the process model view (500) and FIG. 5.2 shows a right side of the process model view (500).

The process model view (500) displays visualizations of the process model, values for parameters, and values for product emission allocations in a user interface. The process model view (500) includes the process model view (502), the parameter view (522), and the product allocation view (572).

The process model view (502) displays a visualization of the process model represented by a process node of a process map, such as the node (402) of FIG. 4.1. The process model may be generated with a programming environment, which may be a graphical programming environment that represents the process model as a virtual instrument. The process model includes multiple icons that represent unit operations that transform input products to output products. The process model also includes icons that represent the product outputs from the process that correspond to nodes on the process map. For example, the icons (508), (515), and (518) correspond to "C3 & C4", "Kerosene", and "Diesel" represented by the product nodes (408), (415), and (418), respectively, of FIG. 4.1.

The parameter view (522) displays parameters used by the process model displayed in the process model view (502). The parameters include the flow rates (525) and the conditions (528). The flow rates (525) include the kerosene flow rate (535) and the diesel flow rate (538) that correspond to the kerosene and diesel product icons (515) and (518) on the process model (502). The flow rates may be measured in kilograms per hour (kg/h). The conditions (528) include multiple values for multiple types of data, including temperatures and pressures at different unit operations. The described (and illustrated) parameter examples are just example of the parameters that may be used to build a digital twin.

The product allocation view (572) displays the product emission allocations generated by the process model for the product output by the process represented by the process model view (500). The interface elements (575), (578), (580), (582), (585), (588), (590), (592), and (595) each include a label and a value for a product emission allocation. The interface elements of the product allocation view (572) correspond to the product nodes of a process map. For example, the interface elements (578), (585), and (588), correspond to the product nodes (408) ("C3 & C4"), (415) ("Kerosene"), and (418) ("Diesel") of FIG. 4.1. The values for the product emission allocations in the product allocation view (572) are calculated using the process model and may diverge from normalized values calculated by dividing individual flow rates by the combined total flow rates for the output products as a more accurate alternative to previous techniques.

FIG. 6.1 and FIG. 6.2 illustrate the process view (600). FIG. 6.1 shows a left side of the process view (600) and FIG. 6.2 shows a right side of the process view (600).

The process view (600) is updated from the process view (400) of FIG. 4.1 and FIG. 4.2 to add a footprint node, i.e., the energy node (682). The energy node (682) may be added responsive to user interaction, such as by right clicking on the process map displayed within the process map view (600). With the energy node (682), the energy popup view (685) may be displayed.

The energy popup view (685) is a footprint popup view that displays information about the energy data corresponding to the energy node (682), which may be manipulated by a user with the interactive graphical user interface. The information includes a name for the source of energy and may also identify the locations of the energy data that quantify the amount of energy represented by the energy node (682) and used by the processes represented by processed nodes that are connected to the energy node (682). The information for the energy node (682) may be saved upon selection of the button labeled "add", which may also trigger calculation of the process emission values for the process nodes connected to the energy node (682).

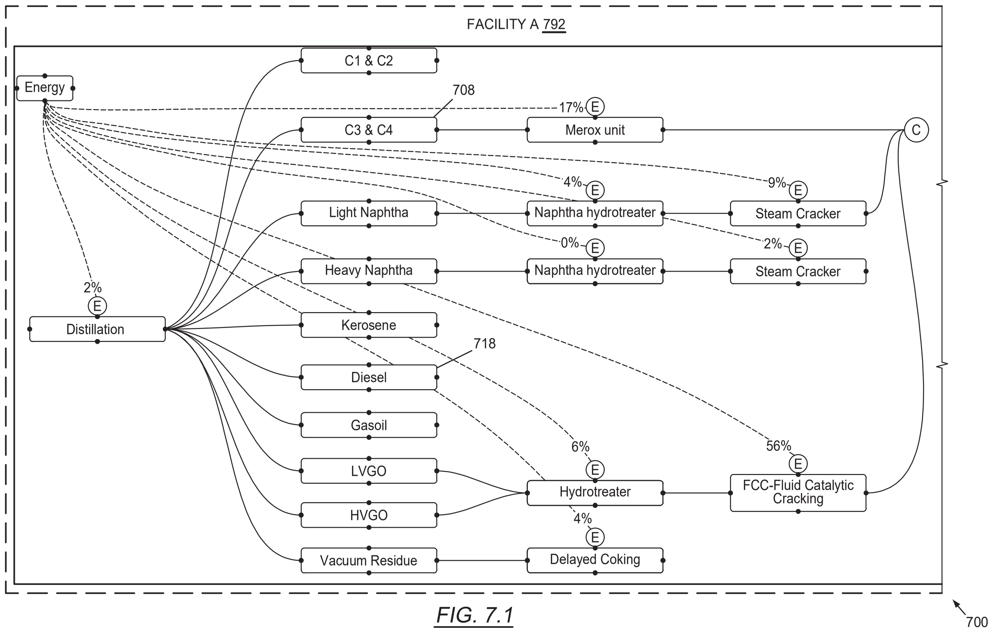

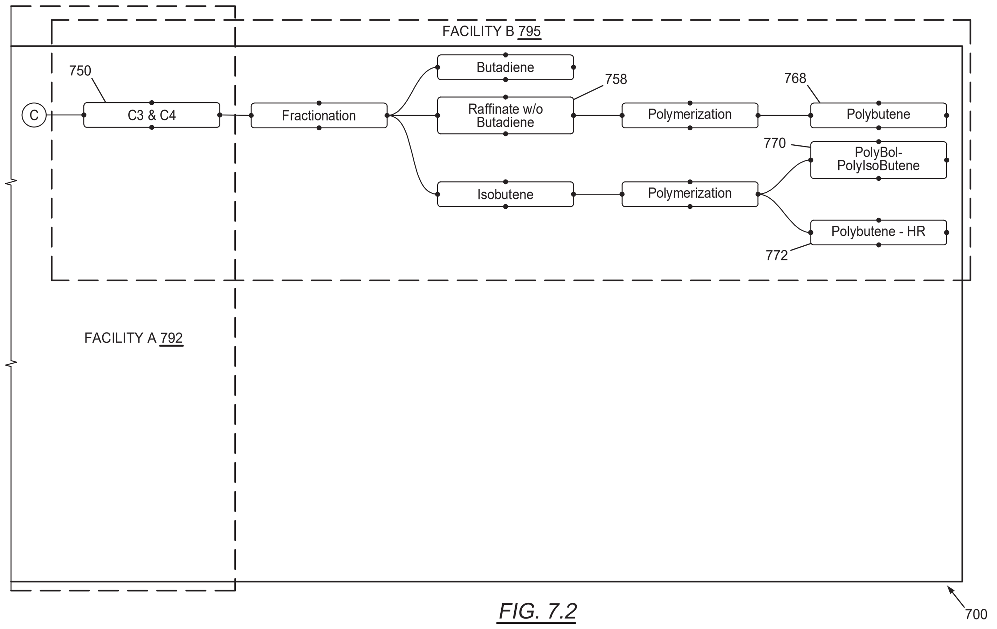

FIG. 7.1 and FIG. 7.2 illustrate the process view (700). FIG. 7.1 shows a left side of the process view (700) and FIG. 7.2 shows a right side of the process view (700).

The process view (700) is updated from the process view (600) of FIG. 6.1 and FIG. 6.2 to remove the energy popup view (685). Additionally, the interface elements (792) and (795) may be displayed to identify the processes that are performed at "Facility A" and "Facility B" respectively. Each of the products including the final product (*e.g.,* the product represented by the product node (768)), the co-products (e.g., the products represented by the product nodes (770) and (772)), and intermediate products (*e.g.,* the products represented by the product nodes (708), (718), (750), and (758)) may be selected to display a dashboard.

Each of the products may be selected to be hidden or displayed. For example, the final product represented by the product node (768) may be hidden and a different final product may be displayed, such as one for diesel as the final product.

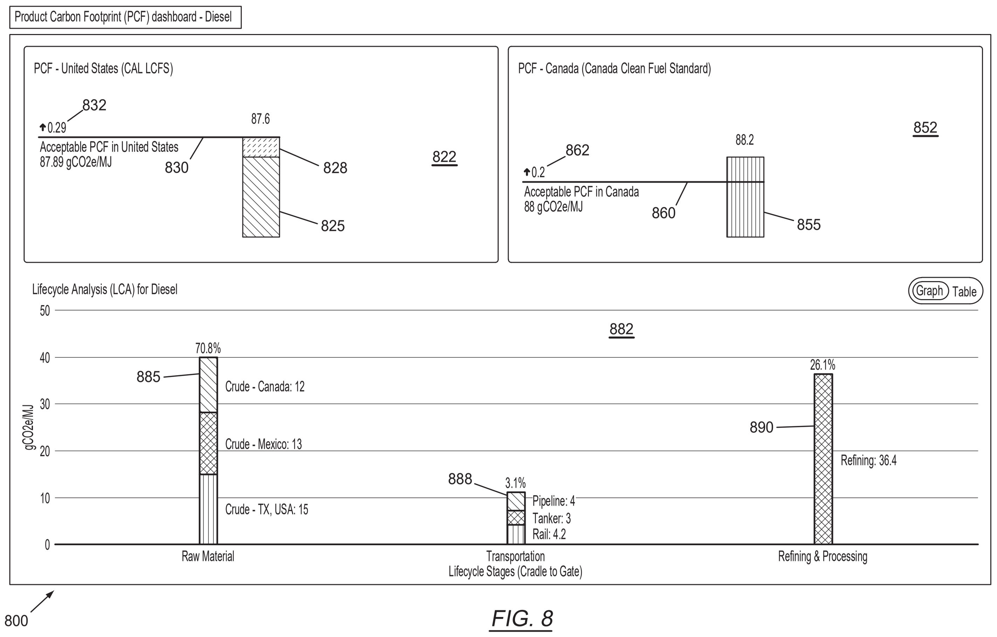

Turning to FIG. 8, the dashboard view (800) is displayed for a product represented by a node of a product map. The product represented in the dashboard view (800) may be for an intermediate product, co-product, final product, *etc.* As an example, the dashboard view (800) may be for the intermediate product ("Diesel") represented by the product node (718) in FIG. 7.1.

Additionally, from the process map in the process view (700) of FIG. 7.1 and FIG. 7.2, additional process nodes and product nodes representing additional processes and products may be connected to the product node (718) as part of a production cycle to make a final product "Diesel". The dashboard view (800) may display values for the final product "Diesel" or the intermediate product (also "Diesel", represented by the node (718) of FIG. 7.1) responsive to selection of the final product or the intermediate product for display in the dashboard view (800).

The dashboard view (800) may itself include multiple views that displays information generated from a process map in accordance with one or more standards. For example, the dashboard view (800) may include the first standard view (822), the second standard view (852), and the lifecycle analysis view (888).

The first standard view (822) shows the emissions attributed to a product from a process map in accordance with a first standard. For example, the standard may be the product carbon footprint as calculated in conformance with the California Low Carbon Fuel Standard (CAL LCFS). The first standard view (822) indicates that a final product of "Diesel" Calculated according to a process map in conformance with the first standard (CAL LCFS) would generate "87.6" grams of CO₂ equivalent per megajoule (gCO₂e/MJ) against the first standard threshold that allows for "87.89" gCO₂e/MJ indicating the first standard is satisfied by "0.29" gCO₂e/MJ. The first standard view (822) may display the emission value and threshold in a bar chart form with the bar (825) shaded green (indicating the standard threshold is satisfied), the amount below the threshold as the bar (828) shaded grey. The threshold may be displayed with the line (830) shaded green and the difference (832) between the emission value and the threshold "0.29" shaded green.

The second standard view (852) shows the emissions attributed to a product from a process map in accordance with a first standard. For example, the standard may be the product carbon footprint as calculated in conformance with the Canada Clean Fuel Standard. The second standard view (852) indicates that a final product of "Diesel" Calculated according to a process map in conformance with the second standard (Canada Clean Fuel Standard) would generate "88.2" grams of CO₂ equivalent per megajoule (gCO₂e/MJ) against the second standard threshold that allows for "88" gCO₂e/MJ indicating that the second standard is not satisfied by "0.2" gCO₂e/MJ. The second standard view (852) may display the emission value and threshold in a bar chart form with the bar (855) shaded red (indicating the standard threshold is not satisfied). The threshold may be displayed with the line (860) shaded green and the difference (862) between the emission value and the threshold "0.2" shaded red.

The lifecycle analysis view (882) displays a bar chart with the bars (885), (888), and (890). The bar (885) indicates the raw material used to create the product represented in the dashboard view (800) is from "Canada", "Mexico", and "TX, USA" and that the extraction accounts for "70.8%" of the emissions for producing the final. The bar (888) indicates the transportation of the material to create the product is by "Pipeline", "Tanker", and "Rail" and accounts for "3.1%" of the emissions. The bar (890) indicates the refining and processing of the material to create the product (*i.e.,* with the production cycle of the product map) accounts for "26.1%" of the emissions.

One or more embodiments may be implemented on a computing system specifically designed to achieve an improved technological result. When implemented in a computing system, the features and elements of the disclosure provide a significant technological advancement over computing systems that do not implement the features and elements of the disclosure. Any combination of mobile, desktop, server, router, switch, embedded device, or other types of hardware may be improved by including the features and elements described in the disclosure.

For example, as shown in FIG. 9.1, the computing system (900) may include one or more computer processor(s) (902), non-persistent storage device(s) (904), persistent storage device(s) (906), a communication interface (908) *(e.g.,* Bluetooth interface, infrared interface, network interface, optical interface, *etc.),* and numerous other elements and functionalities that implement the features and elements of the disclosure. The computer processor(s) (902) may be an integrated circuit for processing instructions. The computer processor(s) (902) may be one or more cores, or micro-cores, of a processor. The computer processor(s) (902) includes one or more processors. The computer processor(s) (902) may include a central processing unit (CPU), a graphics processing unit (GPU), a tensor processing unit (TPU), combinations thereof, *etc.*

The input device(s) (910) may include a touchscreen, keyboard, mouse, microphone, touchpad, electronic pen, or any other type of input device. The input device(s) (910) may receive inputs from a user that are responsive to data and messages presented by the output device(s) (912). The inputs may include text input, audio input, video input, *etc.,* which may be processed and transmitted by the computing system (900) in accordance with one or more embodiments. The communication interface (908) may include an integrated circuit for connecting the computing system (900) to a network (not shown) (e.g., a local area network (LAN), a wide area network (WAN), such as the Internet, mobile network, or any other type of network) or to another device, such as another computing device, and combinations thereof.

Further, the output device(s) (912) may include a display device, a printer, external storage, or any other output device. One or more of the output device(s) (912) may be the same or different from the input device(s) (910). The input device(s) (910) and output device(s) (912) may be locally or remotely connected to the computer processor(s) (902). Many different types of computing systems exist, and the aforementioned input device(s) (910) and output device(s) (912) may take other forms. The output device(s) (912) may display data and messages that are transmitted and received by the computing system (900). The data and messages may include text, audio, video, *etc.,* and include the data and messages described above in the other figures of the disclosure.

Software instructions in the form of computer readable program code to perform embodiments may be stored, in whole or in part, temporarily or permanently, on a non-transitory computer readable medium, such as a solid state drive (SSD), compact disk (CD), digital video disk (DVD), storage device, a diskette, a tape, flash memory, physical memory, or any other computer readable storage medium. Specifically, the software instructions may correspond to computer readable program code that, when executed by the computer processor(s) (902), is configured to perform one or more embodiments, which may include transmitting, receiving, presenting, and displaying data and messages described in the other figures of the disclosure.

The computing system (900) in FIG. 9.1 may be connected to, or be a part of, a network. For example, as shown in FIG. 9.2, the network (920) may include multiple nodes (*e.g.,* node X (922) and node Y (924), as well as extant intervening nodes between node X (922) and node Y (924)). Each node may correspond to a computing system, such as the computing system shown in FIG. 9.1, or a group of nodes combined may correspond to the computing system shown in FIG. 9.1. By way of an example, embodiments may be implemented on a node of a distributed system that is connected to other nodes. By way of another example, embodiments may be implemented on a distributed computing system having multiple nodes, where each portion may be located on a different node within the distributed computing system. Further, one or more elements of the aforementioned computing system (900) may be located at a remote location and connected to the other elements over a network.

The nodes (*e.g.,* node X (922) and node Y (924)) in the network (920) may be configured to provide services for a client device (926). The services may include receiving requests and transmitting responses to the client device (926). For example, the nodes may be part of a cloud computing system. The client device (926) may be a computing system, such as the computing system shown in FIG. 9.1. Further, the client device (926) may include or perform all or a portion of one or more embodiments.

The computing system of FIG. 9.1 may include functionality to present data (including raw data, processed data, and combinations thereof), such as results of comparisons and other processing. For example, presenting data may be accomplished through various presenting methods. Specifically, data may be presented by being displayed in a user interface, transmitted to a different computing system, and stored. The user interface may include a graphical user interface (GUI) that displays information on a display device. The GUI may include various GUI widgets that organize what data is shown, as well as how data is presented to a user. Furthermore, the GUI may present data directly to the user, *e.g.,* data presented as actual data values through text, or rendered by the computing device into a visual representation of the data, such as through visualizing a data model.

As used herein, the term "connected to" contemplates multiple meanings. A connection may be direct or indirect (*e.g.,* through another component or network). A connection may be wired or wireless. A connection may be a temporary, permanent, or a semi-permanent communication channel between two entities.

The various descriptions of the figures may be combined and may include, or be included within, the features described in the other figures of the application. The various elements, systems, components, and steps shown in the figures may be omitted, repeated, combined, or altered as shown in the figures. Accordingly, the scope of the present disclosure should not be considered limited to the specific arrangements shown in the figures.

In the application, ordinal numbers (*e.g.,* first, second, third, *etc*.) may be used as an adjective for an element (*i.e.,* any noun in the application). The use of ordinal numbers is not to imply or create any particular ordering of the elements, nor to limit any element to being only a single element unless expressly disclosed, such as by the use of the terms "before," "after," "single," and other such terminology. Rather, ordinal numbers distinguish between the elements. By way of an example, a first element is distinct from a second element, and the first element may encompass more than one element and succeed (or precede) the second element in an ordering of elements.

Further, unless expressly stated otherwise, the conjunction "or" is an inclusive "or" and, as such, automatically includes the conjunction "and," unless expressly stated otherwise. Further, items joined by the conjunction "or" may include any combination of the items with any number of each item, unless expressly stated otherwise.

In the above description, numerous specific details are set forth in order to provide a more thorough understanding of the disclosure. However, it will be apparent to one of ordinary skill in the art that the technology may be practiced without these specific details. In other instances, well-known features have not been described in detail to avoid unnecessarily complicating the description. Further, other embodiments not explicitly described above can be devised which do not depart from the scope of the claims as disclosed herein. Accordingly, the scope should be limited only by the attached claims.

## Claims

1. A method comprising:
displaying a process map view comprising a process map comprising a set of process nodes and a set of product nodes;
displaying a process view for a process model of a process node of the set of process nodes of the process map;
updating the process map view with a footprint node connected to one or more process nodes of the set of process nodes of the process map;
processing a set of process models, comprising the process model, with footprint data corresponding to the footprint node to calculate a set of process emissions;
updating the process map view to display the set of process emissions for the one or more process nodes of the set of process nodes;
processing the set of process emissions to calculate an emission value; and
displaying a dashboard view with the emission value for a product represented by a product node of the set of product nodes.

2. The method of claim 1, further comprising:
displaying a process suggestion view with a list of processes, comprising a process, responsive to a selection of the product; and
updating the process map view to include the process node to represent the process after being selected from the process suggestion view.

3. The method of claim 1 or 2, wherein displaying the process map view comprises:
displaying the process map view responsive to selection of the product, wherein the process map in the process map view is predefined and corresponds to one of the product and a facility type.

4. The method of any one of the preceding claims, wherein displaying the process view comprises:
displaying a process model view comprising an interactive graphical representation of the process model within the process view.

5. The method of any one of the preceding claims, wherein displaying the process view comprises:
displaying a parameter view comprising interactive model parameters within the process view; and
adjusting the interactive model parameters to match a physical process.

6. The method of any one of the preceding claims, wherein displaying the process view comprises:
processing model parameter values collected from interactive model parameters to calculate one or more product emission allocations for one or more product nodes, of the set of product nodes, identified as outputs of the process node within the process view;
displaying a product allocation view comprising the one or more product emission allocations for the one or more product nodes;
processing the one or more product emission allocations to generate the set of process emissions; and
adapting computation of the product emission allocations according to a different set of rules.

7. The method of any one of the preceding claims, wherein updating the process map view with the footprint node comprises:
displaying an footprint popup view to collect footprint parameter data for the footprint data.

8. The method of any one of the preceding claims, wherein updating the process map view with the footprint node comprises:
updating the process map view with a set of footprint nodes, comprising the footprint node, for a set of facilities.

9. The method of any one of the preceding claims, wherein displaying the dashboard view comprises:
displaying a first standard view with a first adjusted emission value compared to a first standard threshold for the product; and
displaying a second standard view with a second adjusted emission value compared to a second standard threshold for the product.

10. The method of any one of the preceding claims, wherein displaying the dashboard view comprises:
displaying a lifecycle analysis view under a first standard view and under a second standard view with a set of emission distributions for the product.

11. A system comprising:
at least one processor; and
an application that, when executing on the at least one processor, performs stored operations comprising the method according to any one of the preceding claims.

12. The system of claim 11, wherein updating the process map view with the footprint node comprises:
displaying an energy popup view to collect energy parameter data for the footprint data.

13. A non-transitory computer readable medium comprising stored instructions executable by at least one processor to perform a method according to any one of the claims 1 - 10.
